# EUROPÄISCHE PATENTANMELDUNG

(11) **EP 1 447 283 A2**
(43) Veröffentlichungstag der Anmeldung: **18.08.2004**
(21) Anmeldenummer: 04405072.2
(22) Anmeldetag: 05.02.2004
(51) Int. Cl.: B60R 19/18, B21C 37/00

(54) **Hohlprofil sowie Verfahren zu seiner Herstellung**

(30) Priorität: 17.02.2003 DE 10306749; 09.04.2003 DE 10316516
(71) Anmelder: Alcan Technology & Management Ltd., 8212 Neuhausen am Rheinfall (CH)
(72) Erfinder: Chitic, Valentin, 74348 Lauffen am Neckar (DE); Kohler, Peter, 8200 Schaffhausen (CH)

(57) **Zusammenfassung**

Bei einem mit zumindest einem Profilhohlraum (12) -- der von miteinander zugeordneten Endabschnitten (14ₑ, 16ₑ) Eckbereiche (30) bildenden Wänden (14, 16) begrenzt ist -versehenen Hohlprofil (11) aus einer Metalllegierung weisen die Wände (14, 16) zumindest teilweise unterschiedliche Dicken ihres Querschnitts auf; die Dicke (f, f₁) des Endabschnitts (14ₑ, 16ₑ) der Wände (14, 16) vermindert sich stufenlos zu einer geringeren Dicke (e, e₁). Zwei einander gegenüberliegende und zueinander etwa parallel verlaufende äußere Wände (14/14; 16/16) des Hohlprofils (11) sollen innenseitig durch zumindest eine angeformte Innenwand (28, 26) verbunden sein. Die äußeren Wände (14, 16) begrenzen mit den Innenwänden (26, 28) mehrere Profilhohlräume (12) und die Wandungen jedes Profilraumes weisen jeweils einen Mittelabschnitt (14ₘ, 16ₘ, 26ₘ, 28ₘ) konstanter Dicke (e, e₁, g, g₁) und beidends dessen einen Endabschnitt (14ₑ, 16ₑ, 26ₑ, 28ₑ) zunehmender Dicke (f, f₁, g, g₁) auf.

## Beschreibung

Die Erfindung betrifft ein Hohlprofil od. dgl. Werkstück mit zumindest einem Profilhohlraum, der von -- mit einander zugeordneten Endabschnitten -- Eckbereiche bildenden Wänden begrenzt ist, insbesondere Hohlprofil aus einer Metalllegierung nach dem Oberbegriff des unabhängigen Patentanspruches. Zudem erfasst die Erfindung ein Verfahren zum Herstellen des Hohlprofils.

Dem Stande der Technik sind rohrförmige bzw. hohlprofilartige Deformationselemente zur Aufnahme von auf diese stirnseitig einwirkender Aufprallenergie zu entnehmen; die Absorption der Aufprallenergie geschieht durch gleichmäßiges Falten der Profilwände beim Stauchen des Deformationselements. So beschreibt beispielsweise die CH-A 691 731 ein Fahrzeug mit einer Stoßstange, welche über Deformationselemente an Fahrzeuglängsträgern befestigt ist. Die Deformationselemente bestehen aus Mehrkammerhohlprofilen, mit wenigstens einem längslaufenden Innensteg. Ein Teil der Aufprallenergie wird durch die balgförmige Faltenbildung beim Stauchen des Deformationselements in Profillängsrichtung absorbiert.

Derartige Deformationselemente sollen eine möglichst hohe spezifische Energieabsorption aufweisen, d.h. es soll möglichst viel Energie je eingesetzte Masseinheit absorbiert werden; nur auf diese Weise kann den Forderungen nach möglichst leichten und gleichzeitig sicheren -- d.h. mit energieabsorbierenden Strukturen ausgerüsteten -- Fahrzeugen entsprochen werden.

In einem anderen Zusammenhang beschreibt die DE 35 32 499 C1 ein Verfahren und eine Vorrichtung zum hydraulischen Aufweiten eines Rohrabschnitts mittels einer in das Rohr einführbaren zapfenartigen zylindrischen Sonde, die dank im Abstand voneinander befindlicher Dichtringe mit dem aufzuweitenden Rohrabschnitt einen Ringraum bildet; dieser wird zum Aufweiten mit Druckmittel gefüllt. Die beiden Dichtringe sind jeweils in einer ringförmigen Aufnahmenut U-förmigen Querschnitts in der Sonde angeordnet und haben im Ausgangzustand beim Einführen der Sonde in das Rohr einen höchstens dem Außendurchmesser der Sonde entsprechenden Außendurchmesser. Vor Beginn des Aufweitungsvorganges werden sie zum Abdichten des entstandenen Ringspaltes zwischen Sonde und Rohr mit Druckmittel beaufschlagt, das den Aufnahmenuten durch eine Druckmittelzuführung mit angeschlossener Verbindungsleitung zugeführt wird. Die Druckmittelzufuhr zum Ringraum geschieht ausschließlich über zumindest eine der Aufnahmenuten und wird durch einen als Ventilkörper dienenden Dichtring gesteuert, der eine zwischen Aufnahmenut und Ringraum befindliche Öffnung so lange verschließt, bis er durch elastisches Aufweiten seine Dichtwirkung erreicht hat. Jene Aufnahmenut ist in ihrem dem Ringraum benachbarten Rand mit wenigstens einem schrägen Einschnitt versehen. Wird der Druck im Ringraum zwischen den beiden Dichtungen erhöht, beginnt sich die Rohrwand in diesem Bereich zu weiten.

Beim Kalibrieren führen Ecken oder plötzliche Wanddickenänderungen im Werkstück zu ungleichmäßiger Verformung. Auch dehnen sich Wandungen unterschiedlicher Dicke beim Innenhochdruck-Umformen ungleichmäßig aus. Gehen von einer Ecke zwei solch unterschiedliche Wandungen aus, so werden beide Wandungen durch den Innendruck an das Werkzeug gedrückt. Die dickere Wandung bleibt dort fast stehen, während die dünnere Wandung -- geringeren Widerstandsmomentes -- in die Ecke gezogen wird. Dies führt zu einer Verjüngung der dünneren Wandung zum Eckbereich hin.

Um nun eine durch die Bauteilschwächung entstehende Rissgefahr zu unterbinden sowie 'eine konstante Wanddicke für thermische Verbindungen zu schaffen, wird durch die DE 198 51 326 C1 der Anmelderin vorgeschlagen, an die dickere Wandung der die Ecke bildenden Paarung aus Stirnwand und Seitenwand einen von der Ecke ausgehenden Endabschnitt der dünneren Wandung anzuschließen, dessen Dicke etwa jener der dickeren Wandung entspricht. Die Dicke des Endabschnittes ist konstant, und dieser geht an einer Innenstufe in den dünneren Bereich der dünnen Wandung über. Bei anderen Ausgestaltungen ist ein sich querschnittlich von der dickeren Wandung weg verjüngendes Eck vorgesehen oder ein querschnittlich zwischen der dickeren Wandung und der dünneren Wandung gekrümmter Endabschnitt, der dann bevorzugt eine teilkreisförmige Innenkontur jenes Querschnittes oder eine parabelartige Innenkontur aufweist.

In Kenntnis dieser Gegebenheiten hat sich der Erfinder das Ziel gesetzt, ein Hohlprofil der eingangs genannten Art zu entwickeln, welches eine höhere spezifische Energieabsorption aufweist als ein herkömmliches Deformationselement. Zudem soll die Bruchsicherheit bei solchen Hohlprofilen während des Umformvorganges sowie bei deren Einsatz verbessert werden.

Zur Lösung dieser Aufgabe führt die Lehre des unabhängigen Patentanspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß vermindert sich die Dicke des an den Eckbereich anschließenden Endabschnitts der Wandung stufenlos zu einer geringeren Dicke, d.h. der Wandquerschnitt verjüngt sich ohne -- mögliche Schwachstellen erzeugende -- Stufungen. Dazu haben sich zwei Ausgestaltungen als besonders günstig erwiesen; bei einer ist die Dicke des Endabschnittes der Wandung des Hohlprofils über eine von der Ecke ausgehende Länge konstant gehalten, und am Fußpunkt dieses Endabschnitts beginnt der sich stetig verjüngende Wandquerschnitt; im anderen Falle nimmt die Dicke der Wandung von dem einen Eckbereich zum anderen Eckbereich des Hohlprofils konstant ab.

Nach einem anderen Merkmal der Erfindung entspricht die Länge des erwähnten Endabschnitts der Wandung -- insbesondere einer Profilseitenwand -- etwa einem Drittel bis einem Viertel der Wandlänge.

Bevorzugt wird, dass an den sich von einem Eckbereich des Hohlprofils querschnittlich verjüngenden Endabschnitt der Wandung ein sich gegenläufig zu einer größere Dicke erweiternder Abschnitt der Wandung anschließt. Diese Wandung besteht also aus zwei gegenläufig dicker werdenden Abschnitten; der Übergang zwischen diesen bleibt ohne Stufung und bietet somit die oben erwähnten Vorteile an. Entsprechend kann auch die andere Formgebung eingesetzt werden, wenn einem Wandungsabschnitt mit einem an eine querende Wandung anschließenden Endabschnitt konstanter Dicke und sich von dessen Fußpunkt stetig vermindernder Dicke ein sich querschnittlich gegenläufig zur anderen querenden Wandung erweiternder Wandungsabschnitt angeformt ist; letzterer kann ohne oder mit einem Endabschnitt konstanter Dicke ausgestattet sein.

Bei einer weiteren Ausgestaltung des erfindungsgemäßen Hohlprofils soll die äußere Wandung des Hohlprofils jeweils zwischen zwei Endabschnitten -- zueinander gerichtet -- abnehmender Dicke einen Mittelabschnitt konstanter Dicke aufweisen; diesen flankieren also jene Endabschnitte und ergeben mit ihm erfindungsgemäß eine Außenfläche in einer gemeinsamen Ebene.

Im Rahmen der Erfindung liegt auch, dass zwei -- bevorzugt zueinander etwa parallel verlaufende -- einander gegenüberliegende äußere Wände des Hohlprofils innenseitig durch zumindest eine angeformte Innenwand verbunden sind. Dabei sollen die äußeren Wände mit den Innenwänden mehrere Profilhohlräume begrenzen und die Wandungen jedes Profilraumes jeweils einen Mittelabschnitt konstanter Dicke und beidends dessen Endabschnitt zunehmender Dicke aufweisen.

Des Hohlprofils Außenwände bestimmen nach einem weiteren Merkmal einen rechteckigen Querschnitt, dessen Zentrum der Kreuzungsbereich zweier Innenwände zugeordnet ist. Die querschnittliche Länge des Mittelabschnittes soll dabei etwa der doppelten Querschnittslänge des angeformten Endabschnitts entsprechen.

Vorteilhafterweise nimmt die Wanddicke der Endabschnitte der äußeren Wand zum Eckbereich hin kontinuierlich zu, oder es nimmt die Wanddicke der Endabschnitte der Innenwand zur Außenwand hin kontinuierlich zu, wobei dann eine Wandmittelebene eine Symmetrieebene bildet.

Als günstige Maßgabe wurde gefunden, dass die maximale Wanddicke -- oder die mittlere Wanddicke -- des Profilwand-Endabschnitts zumindest 5 %, vorzugsweise wenigstens 15 % -- und insbesondere mindestens 20 % größer -- sein soll als die Wanddicke des zum Profilwand-Endabschnitt benachbarten Profilwandabschnitts, oder jene maximale bzw. die mittlere Wanddicke des Profilwand-Endabschnitts soll höchstens 200 %, vorzugsweise höchstens 100 % -- insbesondere höchstens 60 % -- größer sein als jene minimale Wanddicke des zum Profilwand-Endabschnitt benachbarten Profilwandabschnitts.

Schließlich ist nach einem anderen Merkmal der Erfindung die Wanddicke des dem Profilwand-Endabschnitt benachbarten Profilwandabschnitts uniform bzw. konstant. Auch soll die Außenfläche der Profilwand eben sein und deren innenliegende Profilwandfläche in den Profilwand-Endabschnitten eine relativ zur Außenfläche gemessene, die Wanddicke erhöhende Steigung aufweisen.

In jedem Falle ergibt sich ein neuartiges Hohlprofil, das die vom Erfinder gesehene Aufgabe in bestechender Weise zu lösen vermag.

Von besonderer Bedeutung ist für die Erfindung, dass das oben erörterte Hohlprofil durch Erzeugung eines Innenhochdrucks im Profilraum mittels eines strömbaren Wirkmediums umgeformt werden soll, nämlich durch das sog. Innenhochdruck-Umformen (IHU-Verfahren); bei diesem wird das Hohlprofil durch Innendruck ausgedehnt. Zusätzlich kann das Hohlprofil mittels wenigstens eines Stempels nachgeschoben werden, der am Werkstück stirnseitig angreift. Auf diese Weise kann letzteres aufgeweitet, gestaucht bzw. expandiert werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: eine Schrägsicht auf ein Einkammer-Hohlprofil etwa rechteckigen Querschnitts;
- Fig. 2:: die vergrößerte Frontansicht zu Fig. 1;
- Fig. 3:: die Frontansicht zu einem Mehrkammer-Hohlprofil;
- Fig. 4:: einen Querschnitt durch ein weiteres Einkammer-Hohlprofil.

Beim sog. Innenhochdruck-Umformen (IHU) wird ein -- aus einer Aluminiumlegierung -- auf dem Wege des Strangpressens erzeugtes Hohlprofil 10 durch einen in seinem Profilraum 12 eingestellten Innendruck aufgeweitet. Dieses Einkammer-Hohlprofil 10 etwa rechteckigen Querschnitts der Breite b und der Höhe h weist zum einen zwei Querwände 14 als Bodenwand bzw. Firstwand sowie zum anderen diese verbindende Seitenwände 16 auf. Deren in sich gerade Außenflächen 15, 17 bestimmen gerundete Profilecken 30, die parallel zur Profillängsachse A verlaufen.

Die entsprechenden Innenflächen 15ᵢ, 17ᵢ der Wände 14, 16 -- der äußeren Länge b bzw. h -- enthalten jeweils einen zur benachbarten Außenfläche 15, 17 parallelen Mittelabschnitt, der einen Wandabschnitt 14ₘ, 16ₘ konstanter Dicke e, e₁ und einer Länge a, c bestimmt. An den mittleren Wandabschnitt 14ₘ, 16ₘ schließt beidends jeweils ein Endabschnitt 14ₑ, 16ₑ konstant zunehmender Dicke f, f₁ an. Die Wanddicken e, e₁, f, f₁ sind dabei orthogonal zu entsprechenden Profilwandmittelflächen E, E₁ gemessen.

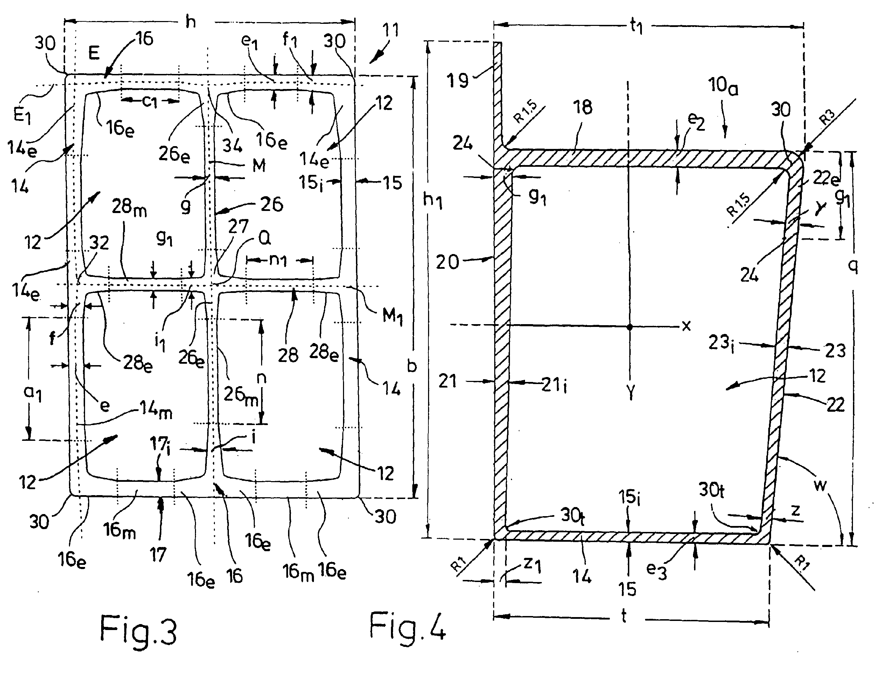

Fig. 3 bietet ein Mehrkammerprofil 11 der Breite b und der Höhe h an mit vier Profilräumen 12; an die Innenflächen 15ᵢ, 17ᵢ der Querwände 14 und der Seitenwände 16 sind -jeweils mittig -- Innenwände 26, 28 angeformt, die sich im Zentrum Q des Hohlprofils 10ₐ kreuzen und querschnittlich einen zentralen Kreuzungsbereich 27 bilden. Die beiden Querschnittsbalken dieses symmetrischen Kreuzes stellen die Innenwände der vier Profilkammern oder -räume 12 dar, deren Außenbegrenzung durch die Außenwände 14, 16 gegeben ist.

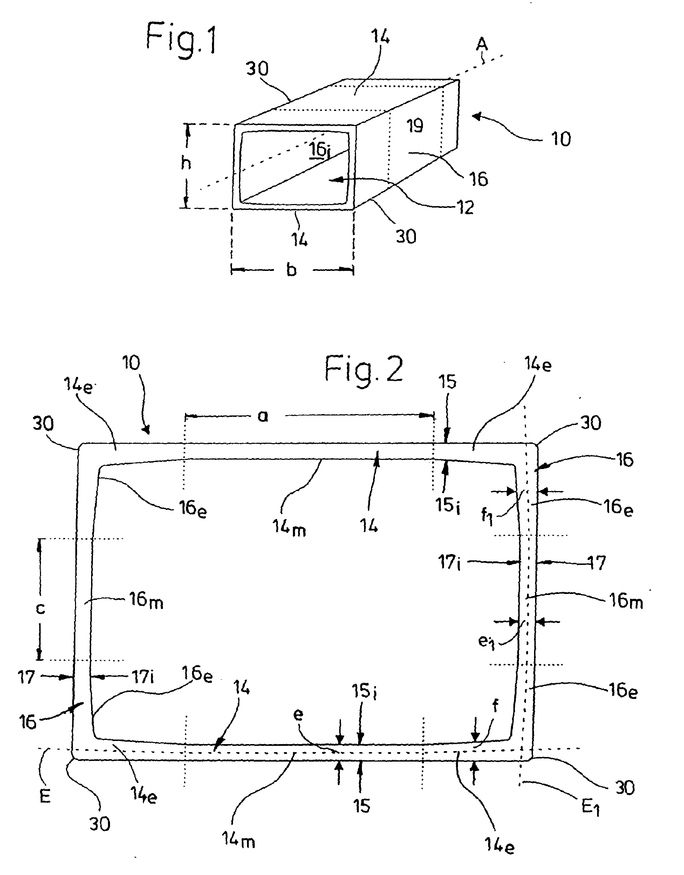

Die von den Querwänden 14 sowie den Seitenwänden 16 gebildeten Außenwände weisen auch hier zwischen den Profilecken 30 in sich ebene Außenflächen 15, 17 auf. Bei dieser Ausgestaltung ist jeder der einen der Profilinnenräume 12 begrenzenden Wandabschnitte so aufgebaut, wie dies zu Fig. 2 anhand der Mittelabschnitte 14ₘ, 16ₘ -- hier einer Länge a₁ bzw. c₁ -- und der Endabschnitte 14ₑ, 16ₑ beschrieben ist. Ebenfalls sind die inneren Profil- oder Innenwände 26, 28 -- entsprechend den oben beschriebenen Außenwänden 14, 16 -- in mit Profilwand-Mittelabschnitte 26ₘ, 28ₘ der Längen n, n₁ und konstanter Dicke g, g₁ sowie Profilwand-Endabschnitte 26ₑ, 28ₑ zunehmender Dicke i, i₁ gegliedert. Für letztere bildet eine Wandmittelebene M, M₁ eine Symmetrieebene, d. h. die Endabschnitte 26ₑ, 28ₑ erweitern sich -- zu den angeformten Außenwänden 14, 16 hin -querschnittlich konisch.

Die dem erwähnten Zentrum Q nahen Profilwand-Endabschnitte 26ₑ, 28ₑ der inneren Profilwände 26, 28 bilden jenen zentralen Kreuzungs- oder Knotenbereich 27. Die anderen Profilwand-Endabschnitte 26ₑ, 28ₑ der inneren Profilwände 26, 28 stellen ferner in den Anformbereichen zu den äußeren Profilwänden 14, 16 äußere Knotenbereiche 32, 34 dar.

Das Hohlprofil 10ₐ der Fig. 4 ist ebenfalls ein Einkammerprofil und weist als obere Querwand 18 eine Stirn- oder Firstwand einer konstanten Wanddicke e₂ von 3 ± 0,2 mm auf, der in einem äußeren Abstand q von hier etwa 75 mm eine Bodenwand als untere Querwand 14 geringerer konstanter Dicke e₃ parallel gegenüberliegt. Beiden ist eine zu ihnen rechtwinkelig verlaufende Seitenwand 20 angeformt. Die Gesamtlänge h₁ dieser einends mittels einer Außenrippe 19 verlängerten Seitenwand 20 misst hier etwa 95 mm. Der besseren Übersicht halber ist ein zur Firstwand 18 sowie zur Seitenwand 20 paralleles Koordinatenkreuz X, Y in der Zeichnung angedeutet.

Die Bodenwand 14 ist mit etwa 51 mm von geringerer Länge t als die Firstwand 18, deren Länge t₁ etwa 58 mm misst, so dass die zweite Seitenwand 22 des Hohlprofils 10ₐ in einem Außenwinkel w von etwa 85° zur Ebene der kürzeren Bodenwand 14 geneigt ist. In den an die Firstwand 18 anschließenden - - mit ihr eine obere Profilecke 39 bildenden -- Endabschnitt 22ₑ einer Länge q₁ von 15 mm der geneigten Seitenwand 22 beträgt deren konstante Wanddicke y 2,0 ± 0,2 mm. An den Fußpunkt 24 des Endabschnitts 22ₑ schließt eine zur Außenfläche 23 der Seitenwand 22 geneigte Innenfläche 23ᵢ dieser Seitenwand 22 an, die nahe der unteren Profilecke 30ₜ eine Wanddicke z von 2,0 ± 0,2 mm bestimmt.

Die Innenfläche 21ᵢ der in der Zeichnung linken Seitenwand 20 ist insgesamt von deren oberen -- der Firstwand 18 benachbarten -- Bereich der Wanddicke y₁ zu deren unteren Profilecke 30ₜ -- und damit zur Außenfläche 21 dieser Seitenwand 20 -- geneigt. An dieser misst die bodenwärtige Wanddicke z₁ ebenfalls 2,0 ± 0,2 mm.

Der Übergang zwischen dem Endabschnitt 22ₑ der Seitenwand 22 und der Firstwand 18 ist im übrigen ebenso gerundet wie der Übergang der Firstwand 18 in die andere Seitenwand 20.

Die unterschiedliche Querschnittsgestaltung der in Fig. 4 linken Seitenwand 20 zum einen und der den Endabschnitt 22ₑ aufweisenden rechten Seitenwand 22 zum anderen ist in der Zeichnung beispielhaft gemeinsam an einem Hohlprofil 10ₐ erläutert. Es ist jedoch auch möglich, die eine oder die andere Formgebung bei beiden einander gegenüberliegenden Wänden 20, 22 eines Hohlprofils vorzunehmen.

Nicht dargestellt ist zudem eine andere Ausgestaltung des Hohlprofils, bei der die in Fig. 4 der Zeichnung dargestellte Querschnittsform der Seitenwand 20 oder 22 in einem fortsetzenden Teil der Seitenwand gegenläufig ist, dass sich also die Seitenwand von der geringen Dicke z wieder stufenlos zur größeren Dicke y₁ erweitert. In diese Formgebung kann auch ein zweiter Endabschnitt konstanter Dicke y einbezogen werden.

## Patentansprüche

1. Hohlprofil od.dgl. Werkstück mit zumindest einem Profilhohlraum (12), der von miteinander zugeordneten Endabschnitten (14ₑ, 16ₑ, 22ₑ) Eckbereiche (30) bildenden Wänden (14, 16, 18, 20, 22) begrenzt ist, insbesondere Hohlprofil (10, 10ₐ, 11) aus einer Metalllegierung, wobei die Wände zumindest teilweise unterschiedliche Dicken ihres Querschnitts aufweisen,
**dadurch gekennzeichnet,**
**dass** sich die Dicke (f, f₁, y, y₁) des Endabschnitts (14ₑ, 16ₑ, 20) der Wandung (14, 16, 20) stufenlos zu einer geringeren Dicke (e, e₁, z₁) vermindert.

2. Hohlprofil nach Anspruch 1, **dadurch gekennzeichnet, dass** die Dicke (y) des Endabschnitts (22ₑ) der Wandung (22) des Hohlprofils (10ₐ) über eine von der Ecke (30) ausgehende Länge (q₁) konstant gehalten und am Fußpunkt (24) des Endabschnitts der sich verjüngende Wandquerschnitt angesetzt ist (Fig. 4).

3. Hohlprofil nach Anspruch 1, **dadurch gekennzeichnet, dass** sich die Wandung (16) von dem einen Eckbereich (30; Dicke y₁) zum anderen Eckbereich (30ₜ, Dicke z₁) des Hohlprofils (10ₐ) konstant vermindert.

4. Hohlprofil nach Anspruch 2, **dadurch gekennzeichnet, dass** die Länge (q₁) des Endabschnittes (22ₑ) der dünneren Wandung (22) etwa einem Drittel bis einem Viertel der Wandlänge (q) entspricht.

5. Hohlprofil nach einem der Ansprüche 1 bis 4, **dadurch gekennzeichnet, dass** an den sich von einem Eckbereich (30) des Hohlprofils (10, 10ₐ, 11) querschnittlich verjüngenden Endabschnitt (14ₑ, 16ₑ) der Wandung (14, 16, 20) ein sich gegenläufig zu einer größeren Dicke (y, y₁) erweiternder Abschnitt der Wandung anschließt.

6. Hohlprofil nach Anspruch 5, **dadurch gekennzeichnet, dass** ein Wandungsabschnitt mit einem an eine querende Wandung (18) anschliessenden Endabschnitt (22e) konstanter Dicke (y) eine sich von dessen Fusspunkt (24) stetig vermindernder Dicke (z) aufweist.

7. Hohlprofil nach Anspruch 6, **dadurch gekennzeichnet, dass** die zur anderen querenden Wandung (14) sich erweiternde Wandung (22) mit einem Endabschnitt (22ₑ) konstanter Dicke (y) versehen ist.

8. Hohlprofil nach einem der Ansprüche 1 bis 7, **dadurch gekennzeichnet, dass** die äußere Wandung (14, 16) des Hohlprofils (10) jeweils zwischen zwei Endabschnitten (14ₑ, 16ₑ) zueinander abnehmender Dicke (f, f₁) einen Mittelabschnitt (14ₘ, 16ₘ) konstanter Dicke (e, e₁) aufweist.

9. Hohlprofil nach einem der Ansprüche 1 bis 7, **dadurch gekennzeichnet, dass** zwei einander gegenüberliegende äußere Wände (14/14; 16/16) des Hohlprofils (11) innenseitig durch zumindest eine angeformte Innenwand (28, 26) verbunden sind (Fig. 3).

10. Hohlprofil nach Anspruch 9, **dadurch gekennzeichnet, dass** die einander gegenüberliegenden Wände (14/14; 16/16) zueinander etwa parallel verlaufen.

11. Hohlprofil nach Anspruch 9 oder 10, **dadurch gekennzeichnet, dass** die äußeren Wände (14, 16) mit den Innenwänden (26, 28) mehrere Profilhohlräume (12) begrenzen und die Wandungen jedes Profilraumes jeweils einen Mittelabschnitt (14ₘ, 16ₘ, 26ₘ, 28ₘ) konstanter Dicke (e, e₁, g, g₁) und beidends dessen einen Endabschnitt (14ₑ, 16ₑ, 26ₑ, 28ₑ) zunehmender Dicke (f, f₁, g, g₁) aufweisen.

12. Hohlprofil nach Anspruch 9 oder 10, **dadurch gekennzeichnet, dass** seine Außenwände (14, 16) einen rechteckigen Querschnitt bestimmen und dessen Zentrum (Q) der Kreuzungsbreich (27) zweier Innenwände (26, 28) zugeordnet ist.

13. Hohlprofil nach einem der Ansprüche 1 bis 12, **dadurch gekennzeichnet, dass** die querschnittliche Länge (a₁, c₁) des Mittelabschnittes (14ₘ, 16ₘ, 26ₘ, 28ₘ) etwa der doppelten Querschnittslänge des angeformten Endabschnitts (14ₑ, 16ₑ, 26ₑ, 28ₑ) entspricht.

14. Hohlprofil nach einem der Ansprüche 1 bis 13, **dadurch gekennzeichnet, dass** die Wanddicke (f, f₁) der Endabschnitte (14ₑ, 16ₑ) der äußeren Wand (14, 16) zum Eckbereich (30) hin kontinuierlich zunimmt.

15. Hohlprofil nach einem der Ansprüche 9 bis 13, **dadurch gekennzeichnet, dass** die Wanddicke (i, i₁) der Endabschnitte (26ₑ, 28ₑ) der Innenwand (26, 28) zur Außenwand (14, 16) hin kontinuierlich zunimmt, wobei eine Wandmittelebene (M, M₁) eine Symmetrieebene bildet.

16. Hohlprofil nach einem der Ansprüche 8 bis 15, **dadurch gekennzeichnet, dass** die maximale Wanddicke (f, f₁, i, i₁) des Profilwand-Endabschnitts (14ₑ, 16ₑ, 26ₑ, 28ₑ) zumindest 5 %, vorzugsweise wenigstens 15 %, insbesondere mindestens 20 % größer ist als die Wanddicke (e, e₁, g, g₁) des zum Profilwand-Endabschnitt benachbarten Profilwandabschnitts (14ₘ, 16ₘ, 26ₘ, 28ₘ).

17. Hohlprofil nach einem der Ansprüche 8 bis 15, **dadurch gekennzeichnet, dass** die maximale Wanddicke (f, f₁, i, i₁) des Profilwand-Endabschnitts (14ₑ, 16ₑ, 26ₑ, 28ₑ) höchstens 200 %, vorzugsweise höchstens 100 %, insbesondere höchstens 60 % größer ist als die Wanddicke (e, e₁, g, g₁) des zum Profilwand-Endabschnitt benachbarten Profilwandabschnitts (14ₘ, 16ₘ, 26ₘ, 28ₘ).

18. Hohlprofil nach einem der Ansprüche 8 bis 17, **dadurch gekennzeichnet, dass** die mittlere Wanddicke (f, f₁, i, i₁) des Profilwand-Endabschnitts (14ₑ, 16ₑ, 26ₑ, 28ₑ) zumindest 5 %, vorzugsweise wenigstens 15 %, insbesondere mindestens 20 % größer ist als die mittlere Wanddicke (e, e₁, g, g₁) des Profilwand-Endabschnitt benachbarten Profilwandabschnitts (14ₘ, 16ₘ, 26ₘ, 28ₘ).

19. Hohlprofil nach einem der Ansprüche 8 bis 17, **dadurch gekennzeichnet, dass** die mittlere Wanddicke (f, f₁, i, i₁) des Profilwand-Endabschnitts (14ₑ, 16ₑ, 26ₑ, 28ₑ) höchstens 200 %, vorzugsweise höchstens 100 %, insbesondere höchstens 60 % größer ist als die mittlere Wanddicke (e, e₁, g, g₁) des zum Profilwand-Endabschnitt benachbarten Profilwandabschnitts (14ₘ, 16ₘ, 26ₘ, 28ₘ).

20. Hohlprofil nach einem der Ansprüche 8 bis 19, **dadurch gekennzeichnet, dass** die Wanddicke (e, e₁, g, g₁) des dem Profilwand-Endabschnitt (14ₑ, 16ₑ, 26ₑ, 28ₑ) benachbarten Profilwandabschnitts (14ₘ, 16ₘ, 26ₘ, 28ₘ) uniform ist.

21. Hohlprofil nach einem der Ansprüche 8 bis 20, **dadurch gekennzeichnet, dass** die Außenfläche (15, 17) der Profilwand (14, 16) eben ist und deren innenliegende Profilwandfläche (15ᵢ, 17ᵢ) in den Profilwand-Endabschnitten (14ₑ, 16ₑ) eine relativ zur Außenfläche (15, 17) gemessene, die Wanddicke (f, f₁) erhöhende Steigung aufweist.

22. Verfahren zum Umformen eines Hohlprofils nach einem der voraufgehenden Patentansprüche, **dadurch gekennzeichnet, dass** die Umformung durch Erzeugung eines Innenhochdrucks im Profilraum mittels eines strömbaren Wirkmediums durchgeführt wird.

23. Hohlprofil nach Anspruch 6, **gekennzeichnet durch** einen mit zur anderen querenden Wandung (14) querschnittlich gegenläufig erweiternden Wandungsabschnitt.
